# EUROPÄISCHE PATENTSCHRIFT

(11) **EP 0 401 547 B1**
(45) Veröffentlichungstag und Bekanntmachung des Hinweises auf die Patenterteilung: **25.08.1993**
(21) Anmeldenummer: 90108981.3
(22) Anmeldetag: 12.05.1990
(51) Int. Cl.: B60G 3/20, B60G 15/06

(54) **Radaufhängung für Fahrzeuge**
Wheel suspension for vehicles
Suspension de roue pour véhicules

(30) Priorität: 06.06.1989 DE 3918358
(43) Veröffentlichungstag der Anmeldung: 12.12.1990
(73) Patentinhaber: Bayerische Motoren Werke Aktiengesellschaft, 80788 München (DE)
(72) Erfinder: Hajto, Jeno, D-8000 München 2 (DE)

(56) Entgegenhaltungen:
- EP-A- 0 312 649
- DE-A- 3 606 327
- US-A- 2 624 592
- PATENT ABSTRACTS OF JAPAN vol. 9, no. 238 (M-416)(1961) 25 September 1985,& JP-A-60 92106 (HONDA) 23 Mai 1985,
- PATENT ABSTRACTS OF JAPAN vol. 9, no. 142 (M-388)(1865) 18 Juni 1985,& JP-A-60 22509 (MAZDA) 05 Februar 1985,

## Beschreibung

Die Erfindung betrifft eine Radaufhängung für Fahrzeuge gemäß dem Oberbegriff des Anspruchs 1.

Bei bekannten Radaufhängungen, die Federbeine verwenden, wird der Federungskomfort dadurch beeinträchtigt, daß aufgrund von während des Fahrens auftretenden Radlastkräften bzw. Querkräften Biegemomente auf das Dämpferrohr des Schwingungsdämpfers wirken. Aufgrund immer breiter werdender Bereifung vergrößert sich der Spreizungswinkel und damit der Störkrafthebelarm, so daß auch die durch die Radlast- und Querkräfte verursachten Biegemomente größer werden.

Aus der US-A-4 583 759 ist eine Doppelquerlenker-Radaufhängung bekannt, die einen kurzen oberen Dreieckslenker und untere Querlenker und Längsstreben aufweist. Das Federbein ist über ein nachgiebiges Lager an seinem unteren, gabelförmigen Ende mit dem unteren Querlenker verbunden. Die beim Bremsen auftretenden Aufziehmomente werden konstruktionsbedingt über die oberen und unteren Lenker übertragen. Aufgrund der elastischen Lagerung des Federbeins am unteren Querlenker ist eine Abstützung des Radträgers durch die beim Bremsen auftretenden Kräfte und Momente nicht möglich. Durch die drehbare Lagerung des unteren Endes des Federbeins an dem unteren Querträger können über das Federbein keine Querkräfte übertragen werden, so daß das Federbein in dieser Richtung ebenfalls momentenfrei ist. Wie beispielsweise in dem Buch "Die Radführungen der Straßenfahrzeuge" von W. Matschinsky, Verlag TÜV Rheinland, Seite 215, erster Absatz, Bild 9.9 e beschrieben ist, erzeugt eine am Radaufstandspunkt angreifende Bremskraft am unteren Längslenker eine Zugkraft, die etwa dreimal so groß ist wie die Druckkraft beim Antrieb. Dadurch fällt der durch die Pfeilung von Spurstange und unterem Querlenker erzielte Lenkwinkel beim Bremsen auch etwa dreimal so groß aus wie der Lenkwinkel beim Anfahren. Das "Aufziehen" des Radträgers um die Querachse führt zusätzlich zu einer Höhenverlagerung des Spurstangengelenks, die je nach räumlicher Stellung der Spurstange weitere Lenkwinkel zur Folge haben kann. Bekanntermaßen ist dieser "Aufzieheffekt" des Radträgers bei einer Doppelquerlenker-Radaufhängung größer als bei einer Federbeinachse. Das elastische, untere Gelenk wirkt elasto-kinematisch wie ein Kugelgelenk. Bei einem Kugelgelenk sind drei Rotationen, das heißt drei Freiheitsgrade, möglich, wie dies beispielsweise auf der Seite 18, Bild 2.2 e in dem oben genannten Buch von Matschinsky beschrieben ist.

Aufgabe der Erfindung ist es, eine Radaufhängung für Fahrzeuge zu schaffen, bei der sowohl die Belastung des Schwingungsdämpfers durch Biegemomente verringert ist und bei der gleichzeitig die durch die Brems- und Antriebskräfte erzeugten Lenkwinkel kleiner sind als bei herkömmlichen Doppelquerlenker-Radaufhängungen.

Diese Aufgabe wird bei einer Radaufhängung der eingangs genannten Art durch die Merkmale des kennzeichnenden Teils des Anspruchs 1 gelöst.

Durch die erfindungsgemäße Anlenkung des Schwingungsdämpfers am Radträger bleibt das Dämpferrohr in bezug auf die durch die Hoch- oder Querkräfte verursachten Biegemomente momentenfrei. von Vorteil ist ferner, daß die Lage der Lenkungsdrehachse durch eine Veränderung der Geometrie des zusätzlichen Lenkers sowie des Schwingungsdämpfers frei wählbar ist. Vorteilhaft ist ferner, daß die Höhe des Momentanzentrums, unabhängig von der raümlichen Lage des Dämpferrohres, durch die anordnung der oberen und unteren Lenker bestimmt ist.

Ausführungsformen der Erfindung werden nachstehend anhand der Zeichnungen beispielshalber beschrieben. Dabei zeigen:
- Figur 1: eine perspektivische Ansicht einer Radaufhängung mit einem unteren Querlenker in der Dopelgelenkausführung und
- Figur 2: eine perspektivische Ansicht einer weiteren Ausführungsform der Radaufhängung mit einem unteren Lenker in der Eingelenkausführung für ein angetriebenes Vorderrad.

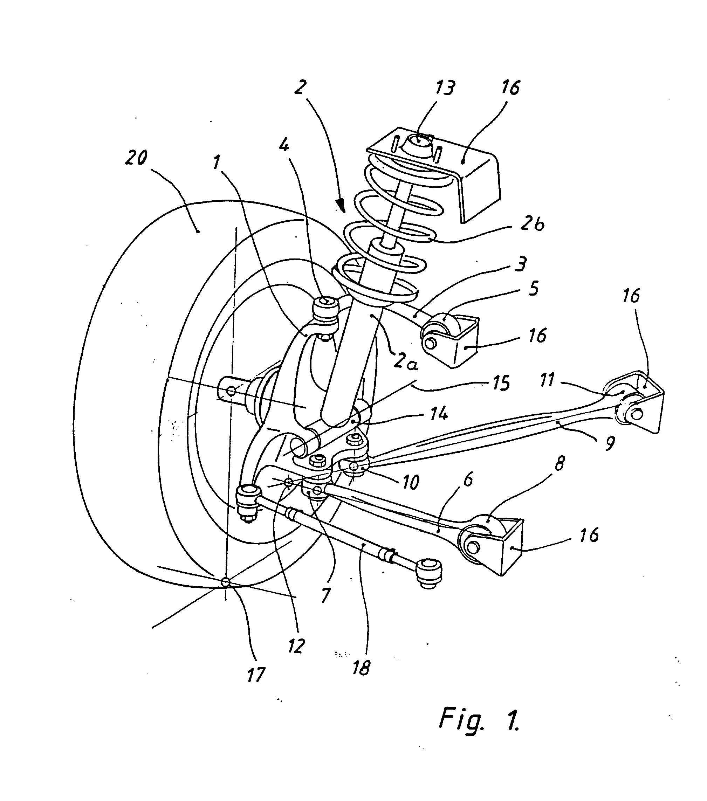

Figur 1 zeigt eine Radaufhängung für Fahrzeuge, insbesondere für Personenkraftfahrzeuge, mit einem ein Rad 20 lagernden Radträger 1. An den Radträger 1 ist über ein Drehgelenk 14 ein Federbein 2, bestehend aus einem Schwingungsdämpfer 2a und einer Feder 2b, angelenkt. Die Drehachse 15 des Drehgelenks 14 ist zur Vermeidung von Hebelarmen weitgehend parallel zur Fahrzeuglängsachse ausgerichtet. Das Federbein 2 ist über ein Stützlager 13 mit dem Fahrzeugaufbau oder dergleichen 16 gelenkig verbunden. Am oberen Ende des Radträgers 1 ist ein Querlenker 3 über ein Gelenk 4 am Radträger angeordnet. Das andere Ende des Lenkers 3 ist über ein Gelenk 5 am Fahrzeugaufbau 16 oder dergleichen angelenkt. Ferner ist der Radträger 1 mit zwei unteren Querlenkern 6 und 9 über Gelenke 7 und 10 verbunden, die sich über Gelenke 8 und 11 am Fahrzeugaufbau oder dergleichen abstützen. Ferner ist in der Figur 1 eine am Radträger 1 gelenkig angeordnete Spurstange 18 eingezeichnet.

Die am Radaufstandspunkt 17 wirkenden Hochkräfte bzw. Querkräfte werden von den Querlenkern 3, 6 und 9 abgestützt, so daß das Dämpferrohr des Schwingungsdämpfers 2a in Hinblick auf die durch diese Kräfte verursachten Biegemomente momentenfrei bleibt.

In der Figur 1 ist ferner der ideelle Gelenkpunkt 12 eingezeichnet, der sich als Schnittpunkt der beiden Längsachsen der unteren Querlenker 6 und 9 ergibt. Durch diesen ideellen Gelenkpunkt 12 geht die nicht dargestellte Lenkungsdrehachse, die zwischen den Verbindungslinien zwischen den Gelenken 4 und 12 sowie 13 und 12 liegt. Durch eine entsprechende Wahl der Geometrie und Anordnung der Lenker bzw. des Federbeins ist die Lenkungsdrehachse frei wählbar.

Schließlich ist die Höhe des Rollzentrums unabhängig von der räumlichen Lage des Federbeins 2 durch die Anordnung der oberen und unteren Lenker 3, 6 und 9 bestimmt.

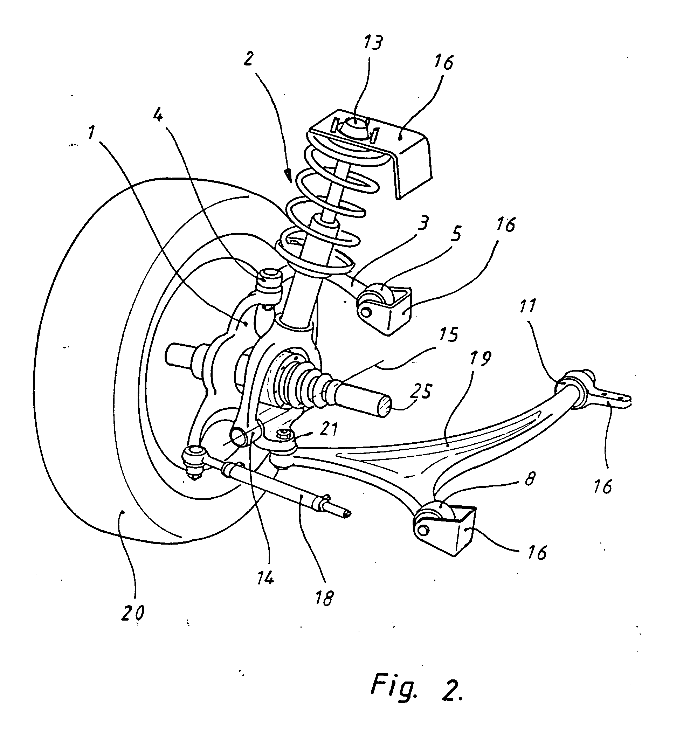

Die in der Figur 2 gezeigte Ausführungsform unterscheidet sich von der in der Figur 1 gezeigten Ausführungsform dadurch, daß die unteren Querlenker 6 und 9 zu einem Querlenker 19 zusammengefaßt sind, der über ein Gelenk 21 mit dem Radträger 1 gelenkig verbunden ist. Ferner ist das Drehgelenk 14 gabelförmig ausgebildet, so daß eine Antriebswelle 25 in der halbkreisförmigen Aussparung angeordnet werden kann.

## Patentansprüche

1. Radaufhängung für Fahrzeuge bestehend aus:
- einem ein lenkbares Rad (20) lagernden Radträger (1),
- mindestens einem am Radträger (1) angelenkten unteren Querlenker (6, 9), der jeweils mit seinem karosserieseitigen Ende mit dem Fahrzeugaufbau oder dergleichen (16) gelenkig verbunden ist
- und einem Federbein (2),
dadurch gekennzeichnet,
- daß das Federbein (2) am Radträger (1) über ein Drehgelenk (14) angeordnet ist, dessen Drehachse (15) weitestgehend parallel zur Fahrzeuglängsrichtung verläuft
- und daß der Radträger (1) über einen einzelnen oberen Querlenker (3) am Fahrzeugaufbau oder dergleichen (16) abgestützt ist, wobei beim Anfahren oder Bremsen auftretenden Längskräfte über das Federbein (2) und über den bzw. die unteren Querlenker abgestützt werden.

## Claims

1. A wheel suspension for vehicles comprising:
a wheel carrier (1) bearing a steerable wheel (20),
at least one bottom transverse link (6, 9) pivoted to the wheel carrier (1), the end of the link on the vehicle body side being pivotably connected to the body or the like (16), and
a spring leg (2),
characterised in that
the spring leg (2) is secured to the wheel carrier (1) via a swivel joint (14) having an axis of rotation (15) substantially parallel to the longitudinal direction of the vehicle, and
the wheel carrier (1) is braced against the vehicle body or the like (16) via a single top transverse link (3), and the longitudinal forces during starting or braking are withstood by the spring leg (2) and the bottom transverse link or links.

## Revendications

1. Suspension de roue pour véhicules automobiles, comportant :
- un porte-fusée (1) sur lequel est monté une roue (20) orientable,
- au moins un bras oscillant transversal (6, 9), articulé au porte-fusée et dont l'extrémité située vers le corps du véhicule est reliée à la structure de celui-ci, ou à une partie analogue, par une articulation,
- une jambe élastique (2),
présentant les caractéristiques suivantes :
- la jambe élastique (2) est reliée sur le porte-fusée par une articulation de rotation (14) dont l'axe (15) est sensiblement parallèle à la direction longitudinale du véhicule,
- le porte-fusée (1) s'appuie, par l'intermédiaire d'un bras oscillant supérieur unique (3) sur la structure du véhicule, en partie analogue (16), de sorte que les forces longitudinales engendrées au démarrage ou au freinage sont encaissées par la jambe élastique et par le ou les bras transversaux inférieurs.
